# EUROPEAN PATENT SPECIFICATION

(11) **EP 2 860 603 B1**
(45) Date of publication and mention of the grant of the patent: **11.07.2018**
(21) Application number: 14179399.2
(22) Date of filing: 31.07.2014
(51) Int. Cl.: G05D 23/13

(54) **Thermostatic mixing valve**
Thermostatisches Mischventil
Soupape thermostatique de mélange

(30) Priority: 01.08.2013 IT MI20131298
(43) Date of publication of application: 15.04.2015
(73) Proprietor: Böme S.r.l., 28010 Cavallirio (IT)
(72) Inventor: Medina, Carlo, 28010 Cavallirio (IT)
(74) Representative: Candito, Rocco

(56) References cited:
- EP-A1- 2 557 340
- GB-A- 1 039 162
- IT-B- 1 180 631
- US-A1- 2011 089 249

## Description

### BACKGROUND OF THE INVENTION

The present invention relates to a thermostatic mixing valve for a heating and/or domestic water circuit of civil/residential or industrial type, more precisely a thermostatic mixing valve with inlets for the cold water and for the hot water arranged according to mutually transverse, in particular orthogonal, directions. The thermostatic mixing valve, which is the object of the present invention, is, in equivalent terms, a so-called valve with "L"-shaped inlets.

### PRIOR ART

Thermostatic mixing valves are known that are mounted along a heating circuit of a building to receive in two inlets that are arranged orthogonally to one another respectively a flow of cold water and a flow of hot water that are mixed together to generate a third flow of water exiting in a direction aligned on the flow of cold water. The aforesaid valves have the object of maintaining constant, at a set value, the temperature of the mixed water as the water supply conditions vary, i.e. as the temperature and pressure of the entering flows of hot and cold water vary.

A first type of valve, for example known from EP1739333, comprises a valve body, provided with a first inlet for the hot water, a second inlet for the cold water that is orthogonal to the first inlet, and an exit for the mixed water. Inside the valve body a conical plug is slidable, having an external transverse dimension that varies from one end to the other, and inside which a thermosensitive element is housed that is slidably connected to a movable piston. Between an internal surface of the valve body and an external surface of the conical plug a mixing chamber for the fluid is defined. The conical plug comprises, above, a first wider part that is slidably in contact with an annular wall of the valve body. This first wider part comprises a bevelled edge that cooperates with a stationary edge placed in the first entry to vary a first passage port for the hot water. The conical port comprises below a second part that is narrower and solid in shape, which is movable with respect to a respective bevelled stationary edge, so as to vary a second passage port for the cold water.

The aforesaid mixing chamber is thus defined, between the valve body and the plug, in a zone interposed between the first passage port placed at the top, and the second passage port placed at the bottom. In other words, the first passage port and the second passage port are far from one another and placed at ends opposite the aforesaid mixing chamber. This means that the valve has to be subjected to precision machining both in the zone of the first passage port and in that of the second passage port, i.e. in two different and far zones.

The aforesaid solid second part comprises a solid cylindrical portion from the lower end of which a solid disc portion projects transversely that has a transverse extent that is such as to stop the passage of the cold water coming from the second entry. The solid disc portion thus has a size, although less, which is comparable with that of the upper part or is not negligible. This means that the pressure of the cold water acting on the lower surface of the disc portion exerts quite a significant axial force that has to be taken into account in dimensioning the valve.

This configuration entails limits to the choice of valve sizes and dimensions and, substantially, limits the production of this type of valve to small sizes, as with large valve sizes, owing to the great pressure forces on the lower part of the plug, constructional and operational problems would be encountered that are difficult to manage. Further, the structural complexity of this valve, in particular the complex geometry of the conical plug, entails manufacturing costs and time that are not as moderate as would be desired.

Further, a valve would be desirable that has greater reaction sensitivity than that of the known valve that has just been disclosed.

Another type of similar valve, i.e. having the hot and cold water inlets in an L-shaped arrangement, comprises a plug made of two distinct parts that are mutually coupled and which is slidable inside the cavity of a valve body. In the valve body a metal annular portion is provided that is obtained as one piece, i.e. integrally, in the valve body and projects radially in a centripetal direction with respect to the longitudinal axis of the plug. This metal annular portion extends to occupy a zone that is partially inside the plug, and cooperates with a part of the latter to control the passage of the flow of hot water and the flow of cold water.

In other words, there are internal parts of the valve that protrude so far as to encroach on the cross section - of the housing cavity - intended to be occupied by the plug.

In order to permit assembly, this configuration necessarily requires the plug to be divided into two distinct pieces and requires these two pieces to be inserted individually from respective opposite sides of the valve body, i.e. one piece through the cold-water inlet side and the other piece through the side opposite the former, in which a calibrating member for the thermosensitive element is also housed. The valve body necessarily has to provide two ring-nut closing portions on said opposite sides. This configuration naturally makes it inconvenient to mount/dismantle the known valve, thus also making maintenance/inspection more difficult, especially in cases in which there are spaces that are narrow and difficult to reach. Further, having to couple the two distinct plug pieces with one another by acting from the respective valve sides entails further important problems. More precisely, in addition to the drawbacks from the point of view of cost and assembly time, there is above all the great risk that between the two pieces of the plug, during assembly, chips, particles of dirt or other foreign bodies remain trapped that alter the geometrical configuration, compromising the correct operation of the known valve.

Another type of valve having the two cold-water and hot-water inlets with an "L" arrangement provides for the closure of the entry for the cold water by the plug to be achieved not by elastic washer elements but to occur by a sliding action of a surface of the plug on a further internal surface of the valve body, these two surfaces being very close to one another to ensure the seal of the fluid. In other words, for this valve, excessive dimensional tolerances between the plug and the cylindrical portion of the valve body housing the plug are relied upon. It is obvious that this configuration entails difficulties in processing the parts defined above, but also a high risk that also a small impurity or piece of detritus that are very common in plants will cause a malfunction or even seizure of the valve.

A thermostatic mixing valve is known from GB1039162, comprising a valve body, in which a cavity is internally defined for receiving the hot and cold water to be mixed. A cold water inlet and a hot water inlet are obtained on the same side of a cylindrical lateral surface of the valve body, whereas a mixed water outlet is provided on an end zone of the valve body. The cold water inlet and the hot water inlet are positioned adjacent to one other and are separated by an annular flange integral with the valve body which radially projects in the valve body cavity.

The valve body houses a cylinder sleeve which is provided with two rows of control slots which are circumferentially arranged. The two rows are separated from one other by an intermediate blind cylindrical portion of the cylinder sleeve wall.

A double body-plunger slide operates within the cylinder sleeve.

The double body-plunger slide is provided with axially parallel passages and with a circumferential opening which is arranged for receiving the flows from the hot water inlet and from the cold water inlet. According to the axial position of the double body-plunger slide, which depends on the action of a temperature responsive actuator, the circumferential opening may reach different possible positions. According to a first operative condition, the circumferential opening reaches a centered position in which it arranges itself in front of the blind intermediate cylindrical portion of the cylinder sleeve so as to uncover part of the hot and cold water inlets, thus letting substantially equal amounts of cold and hot water enter the valve body cavity.

The circumferential opening may reach a further position in which it only faces the hot water inlet, while the blind cylindrical wall of the plunger is in front of the cold water inlet. According to this second operative condition, the cold water is prevented from entering the valve-body, while only hot water may flow therein. According to a third possible operative condition, the circumferential opening reaches a position in which it only faces the cold water inlet while the hot water inlet is covered: therefore, the hot water is prevented from entering the valve-body, while only cold water may flow therein.

For a proper functioning of this known valve, no gaps should be left between the external surface of the double-body plunger and the internal surface of the cylinder sleeve, in order to avoid any leaks of fluid therebetween. In other words, the external diameter of the double-body plunger should be substantially the same as, or only slightly less than the internal diameter of the cylinder sleeve in order that the second and third above-mentioned operative configurations can be adequately achieved. The external surface of the double-body plunger and the internal surface of the cylindrical sleeve must be very close to one another in order to ensure the seal of the fluid, but, at the same time, must enable a sliding movement of the double-body plunger relative to the cylinder sleeve. Strict dimensional tolerances between the double-body plunger and the cylindrical sleeve are thus required, which involve difficulties in manufacturing and assembling the components. The strict dimensional tolerances and the very reduced clearance between the double-body plunger and the cylindrical sleeve involve a high risk of malfunction or even seizure of the valve when the small impurities and detritus, present in the plants, come therebetween. Furthermore, the wear due to the sliding contact of the double-body plunger relative to the cylindrical sleeve, over time, leads to a progressive loss of seal and consequent passage of fluid between the intermediate blind cylindrical portion of the cylinder sleeve wall and the external surface of the double-body plunger with a consequent progressive decrease of functioning-efficiency of the valve.

### OBJECTS OF THE INVENTION

An object of the present invention is to improve the prior-art thermostatic mixing valves and to provide a solution that is able to overcome the drawbacks inherent in known valves.
third possible operative condition, the circumferential opening reaches a position in which it only faces the cold water inlet while the hot water inlet is covered: therefore, the hot water is prevented from entering the valve-body, while only cold water may flow therein.

For a proper functioning of this known valve, no gaps should be left between the external surface of the double-body plunger and the internal surface of the cylinder sleeve, in order to avoid any leaks of fluid therebetween. In other words, the external diameter of the double-body plunger should be substantially the same as, or only slightly less than the internal diameter of the cylinder sleeve in order that the second and third above-mentioned operative configurations can be adequately achieved. The external surface of the double-body plunger and the internal surface of the cylindrical sleeve must be very close to one another in order to ensure the seal of the fluid, but, at the same time, must enable a sliding movement of the double-body plunger relative to the cylinder sleeve. Strict dimensional tolerances between the double-body plunger and the cylindrical sleeve are thus required, which involve difficulties in manufacturing and assembling the components. The strict dimensional tolerances and the very reduced clearance between the double-body plunger and the cylindrical sleeve involve a high risk of malfunction or even seizure of the valve when the small impurities and detritus, present in the plants, come therebetween. Furthermore, the wear due to the sliding contact of the double-body plunger relative to the cylindrical sleeve, over time, leads to a progressive loss of seal and consequent passage of fluid between the intermediate blind cylindrical portion of the cylinder sleeve wall and the external surface of the double-body plunger with a consequent progressive decrease of functioning-efficiency of the valve.

EP2557340 discloses a thermostatic one handle mixing valve for prioritary aperture of cold water and then for the distribution of mixed water to a given temperature.

### OBJECTS OF THE INVENTION

An object of the present invention is to improve the prior-art thermostatic mixing valves and to provide a solution that is able to overcome the drawbacks inherent in known valves.

Another object is to provide a thermostatic mixing valve having a structural configuration that is simple to make, easy and fast to assemble and is suitable for being built in freely selectable dimensions so as to be adapted to any application need.

A further object is to provide a thermostatic mixing valve with great operating sensitivity and precision that is able to ensure effective mixing action and is able to reduce significantly malfunction phenomena and seizure risks due to dirt or detritus that enter the valve.

A further object of the invention is to provide a thermostatic mixing valve that permits easier and more rapid inspections/maintenance and more convenient dismantling and assembly of the internal parts thereof.

### SHORT DESCRIPTION OF THE INVENTION

The above is achievable by means of a thermostatic mixing valve for a hydraulic circuit, according to claim 1.

The thermostatic mixing vale comprises:
- a valve body provided with a first connection for the entry of a first flow of a fluid in a first direction;
- a second connection connected to said valve body for the entry of a second flow of fluid in a second direction arranged transversely to said first direction;
- a third connection for the exit of a third flow, in particular of mixed fluid, in a third direction arranged transversely to said second direction;
- a plug element that is slidable inside a housing cavity defined within said valve body and said second connection, on said plug element passage opening means being obtained for said first flow and for said second flow;
- a closing portion cooperating with said passage opening means for defining a first passage port for said first flow of fluid and a second passage port for said second flow of fluid;
- thermostatic actuating means and counteracting elastic means arranged for driving said plug element and varying in a controlled manner said first passage port and said second passage port so as to maintain constant, at a desired value, the temperature of said third flow of fluid.

The plug element comprises a tubular body bounded externally by a cylindrical surface on which said passage opening means for the fluid is obtained circumferally. The closing portion is defined by an annular closing sealing element housed in a seat defined within the valve body. The annular closing sealing element projects radially so as to intercept the passage opening means for the fluid. The annular closing sealing element has an operating part, arranged in a cantilevered manner, which projects so as to penetrate at least partially inside the passage opening means. The operating part has an internal bounding surface, which faces an internal zone of the plug element, and edge zones mutually spaced: the internal bounding surface and the and edge zones are at least partially positioned inside the passage opening means.

Owing to the thermostatic mixing valve according to the invention, the drawbacks inherent to the known valves disclosed above are overcome.

### SHORT DESCRIPTION OF THE DRAWINGS

Features and advantages of the thermostatic mixing valve will be clear from the claims, from the description that follows and from the attached drawings, which illustrate an embodiment thereof by way of non-limiting example, in which:
Figure 1 is an exploded view of a thermostatic mixing valve according to the invention;
Figures 1A and 1B are different views of a plug element included in the thermostatic mixing valve;
Figure 1C shows a closing seal ring included in the thermostatic mixing valve;
Figure 2 is a longitudinal section of the thermostatic mixing valve according to the invention in a normal operating condition;

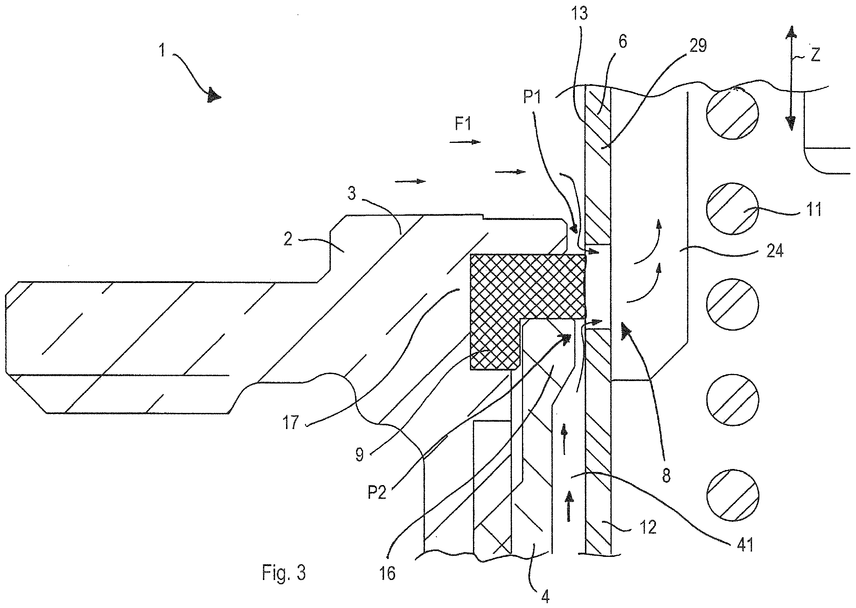

Figure 3 shows a detail of Figure 2;
Figure 4 is an enlarged detail of Figure 3;
Figures 5 and 6 are longitudinal sections of the thermostatic mixing valve respectively in an operating condition in which only the passage of a first flow of fluid is permitted and in a further operating condition in which the passage of only a second flow of fluid is permitted.

### DETAILED DESCRIPTION OF THE INVENTION

With reference to the attached Figures, a thermostatic mixing valve 1 is shown that is suitable for being mounted in a hydraulic circuit, in particular a heating and/or domestic water circuit for building and having the function of maintaining constant, at a set value, the temperature of the mixed water. In other words, the thermostatic mixing valve 1, or thermostatic mixing valve unit, enables self-adjustment of the temperature as water-supply conditions vary, i.e. as the temperature and pressure of the entering water flows vary.

The thermostatic mixing valve 1 comprises a valve body 2 provided with a first connection 3 for the entry of a first flow F1 of fluid according to a first direction X1, in particular a first flow F1 of hot water, and a second connection 4 for the entry of a second flow F2 of fluid, in particular cold water, in a second direction X2 arranged transversely to the first direction X1. The thermostatic mixing valve 1 comprises a third connection 5 for the exit of a third flow F3, in particular of mixed water, in a third direction X3 arranged transversely, in particular orthogonally with respect to said second direction X2. In particular, the first connection 3 and the third connection 5 are axially aligned.

In particular, the second connection 4, of the ring nut type, is removably connected to the valve body 2, in particular by means of a threaded coupling 36, and is oriented orthogonally to the first connection 3, i.e. the first direction X1 and the second direction X2 are orthogonal to one another. In other words, the thermostatic mixing valve 1 comprises inlets arranged in an "L" configuration, and is thus usable in applications in which the cold water and the hot water have entry flow directions that are orthogonal to one another.

In another possible embodiment, the second connection 4 is connected in a non-removable manner to the valve body 2. The second connection 4 can thus be fixed permanently to the valve body 2. The second connection 4 can also be obtained integrally on the valve body 2 so as to be part thereof. In other words, the second connection 4 and the valve body 2 can be obtained from one piece, one with the other. In such embodiments, as explained better below, another part of the valve 1 will be removable to enable the various components to be assembled inside the valve 1.

The valve body 2, together with the second connection 4, defines a housing cavity 7 inside which the two flows F1 and F2 of water come and meet to mix and generate the third flow F3 that on the other hand abandons the valve via the third connection 5 at the desired temperature.

The thermostatic mixing valve 1 comprises a plug element 6 which is slidable, in a movement direction Z, inside the housing cavity 7, and on which passage opening means 8 for the first flow F1 and for the second flow F2 of water are obtained. In particular, the plug element 6 comprises a tubular body 12, thus an internally hollow body, having a cylindrical shape. In particular, the plug element 6 comprises a bounding wall 29, having an external cylindrical surface 13 and bounding, in the plug element 6, a longitudinal through mixing cavity for the first flow F1 and for the second flow F2. The first flow F1 and the second flow F2 mix only once they have entered the plug element 6.

The bounding wall 29 has a much reduced thickness Sp compared with a diameter D1 of the external cylindrical surface 13, and this entails advantages compared with known valve solutions, as specified below.

The passage opening means 8 for the fluid in particular comprises one or more slits 8 that are made through the thickness of the bounding wall 29 and extend circumferally on the latter. The slit/s 8 are delimited by a first surface 39 and a second surface 40. The first surface 39 and the second surface 40 are arranged transversely to the movement direction Z, or, equivalently, to the longitudinal axis of the plug element 6.

The thermostatic mixing valve 1 comprises a closing portion 9 cooperating with the aforesaid passage opening means 8, in particular the slit/s 8, for defining a first passage port PI for the first flow F1 of fluid and a second passage port P2 for the second flow F2 of fluid. The closing portion 9 comprises a closing sealing element 9, in particular having an annular shape.

The valve 1 houses internally thermostatic actuating means 10, such as a piston 10 made of thermosensitive material such as wax and counteracting elastic means 11, such as a compression spring 11, arranged inside the plug element 6. The thermosensitive piston 10 and the compression spring 11 are arranged for driving, in respective opposite directions, the plug element 6 for varying the first passage port PI and the second passage port P2 in a controlled manner so as to maintain constant, at a desired value, the temperature of the third flow F3 of fluid. The valve 1 comprises a suitable calibrating member 37 on which it is possible to act to adjust, i.e. to suitably position, the thermosensitive piston 10 to choose the mixing temperature value that is desired for the third flow F3.

The calibrating member, in particular comprises an adjusting rod 37 that can be screwed in a variable manner in a clamping ring nut 38 that is in turn screwed on the valve body 2. An elastic ring 46 in the clamping ring nut 38 limits the stroke of the rod 37 towards the inside. In another possible embodiment, instead of the clamping ring nut 38 another portion is provided that is entirely obtained in the valve body 2, so as to define a single piece, and the adjusting rod 37 is directly screwable onto the valve body 2. In this case, the second connection 4 will be connected in a removable manner to the valve body 2 to enable the various components to be inserted and assembled inside the valve 1.

This, advantageously, further simplifies structurally the valve 1 according to the invention, thus bringing a financial saving due to one less machining process.

The second removable connection 4 and the valve body 2 are shaped mutually to enable, during the mounting step, the thermostatic actuating means 10, the elastic means 11, the plug element 6 and the closing sealing element 9 to be inserted into the housing cavity 7 easily from the side 33 or from the opposite side of the valve body 2. Similarly, in the embodiment with a second fixed connection 4 and a removable clamping ring nut 38, the thermostatic actuating means 10, the elastic means 11, the plug element 6 and the closing sealing element 9 can be conveniently inserted into the housing cavity 7 from the other side opposite the side 33 of the valve body 2.

In particular, it is easy to introduce the plug element 6 from one side because there are no internal parts of the valve protruding to a point where they encroach on the cross section - of the housing cavity 7 - intended to be occupied by the plug element 6, except for the closing portion 9, which however, being elastically deformable as disclosed above, is not an obstacle to the plug element 6 being inserted.

The plug element 6 can thus be made of a single piece and be easily inserted through the aforesaid side into the housing cavity 7.

The possibility of obtaining the plug element 6 as a single piece, together with the particular geometrical configuration of the valve body 2 and of the connection 4, advantageously, enables certain problems to be overcome that occur during assembly in certain prior-art mixing valves. More precisely, as known mixing valves have a plug consisting of two distinct pieces that need to be inserted separately into the valve body through two respective opposite sides to be mutually coupled, they entail clear drawbacks from the point of view of costs and assembly time and above all entail a great risk that between the two pieces of the plug, during mounting, chips, particles or dirt or other foreign bodies remain entrapped that alter the geometric configuration, compromising the correct operation of the known valve. The thermostatic mixing valve 1 of the invention enables such drawbacks to be avoided, owing to the particular configuration that has just been described.

Further, this configuration enables maintenance/inspections to be facilitated, speeded up and made possible even if available spaces are narrow and difficult to access owing to the possibility of removing all the internal parts of the valve 1 through only one side 33 after removing only the second ring-nut connection 4.

The closing portion 9 will now be disclosed in greater detail.

The closing portion 9, more specifically, comprises an annular closing sealing element 9 that projects radially so as to intercept the slit/s 8 of the plug element 6. The annular closing sealing element 9 is clamped between the valve body 2 and the second connection 4.The closing portion 9 can also be configured with a rectangular section and in such a manner as to be just housed in a seat defined in the valve body 2, for example in an annular throat, in a similar manner to how an O-ring would be housed. In this case, to insert in the respective throat, the closing portion 9 is temporarily deformed elastically and is then released to regain shape inside the aforesaid throat.

In particular, the annular closing sealing element 9 is made of an elastic material that is highly compatible with and resistant to hot and cold water, such as a synthetic rubber, in particular EPDM peroxide.

The closing sealing element 9, which is elastically deformable, comprises a connecting part 14 shaped for being clamped between the valve body 2 and the second connection 4. In another embodiment, as said above, the closing sealing element 9 has a rectangular section and, instead of being clamped, is simply housed in a seat defined in the valve body 2 or defined by the valve body 2 and by the second connection 4, where the second connection 4 may be of the removable type or of a non-removable type.

The closing sealing element 9 projects radially so as to intercept the slit/s 8 for the passage of fluid. More precisely, the closing sealing element 9 comprises an operating part 15, arranged in a cantilevered manner, which projects in a centripetal direction towards the plug element 6 by a certain amount and penetrates at least partially inside the slit/s 8.

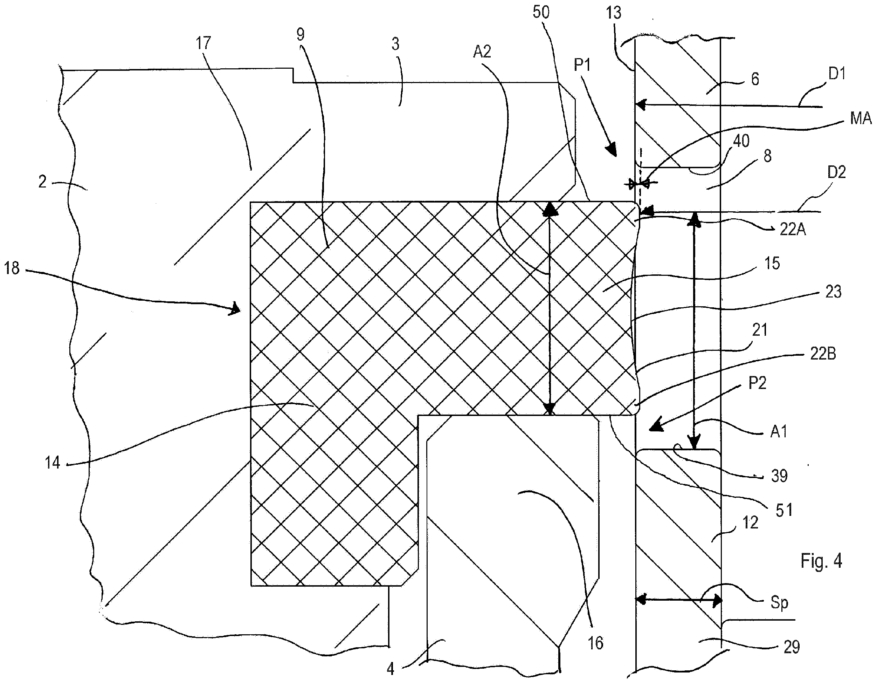

As is more clearly visible in the enlarged section detail in Figure 4, the slit 8 has a size, i.e. a height A1 measured parallel to the longitudinal axis of the plug element 6, which is greater than a further height A2 of the operating part 15 of the annular sealing element 9. This enables the aforesaid first passage port PI and second passage port P2 to be defined that are not fixed but suffer variations due to a movement of the plug element 6 when variations, for example temperature and/or pressure variations occur, in the water flows, as disclosed better below.

An internal end portion 16 of the second connection 4 and an annular portion 17 of the valve body 2 are configured for mutually defining an annular seat 18 in which the connecting part 14 of the annular sealing element 9 is received. The annular seat 18 and the annular sealing element 9 have respective cross sections shaped as a rotated "L".

The operating part 15, arranged in a cantilevered manner, projects in a centripetal direction towards the plug element 6 by a certain amount beyond the internal end portion 16, and beyond the annular portion 17.

The annular sealing element 9, more precisely the operating part 15 thereof, has an internal bounding surface 21 which faces an internal zone of the plug element 6 and which is at least partially positioned inside the passage opening means, in particular inside the slit/s 8.

The operating part 15 comprises a pair of mutually parallel surfaces 50, 51, which are transversely arranged to the internal bounding surface 21, i.e. are transversely arranged with respect to the movement direction Z and the longitudinal axis of the plug element 6. The surfaces 50, 51 extend in part inside the slit/s 8. A part of the surface 50 thus faces the upper surface 40 of the slit 8, and a respective part of the surface 51 faces the lower surface 39 of the slit 8. The upper surface 40 and the lower surface 39 may abut on the respective above-mentioned parts of the further surfaces 50 and 51. Practically, the operating part 15 includes edge zones 22A, 22B, spaced apart from one other and protruding so as to penetrate into the slit/s 8. The edge zones 22A, 22B are configured for being able to go into contact with the upper surface 40 and the lower surface 39 respectively of the slit 8.

According to an advantageous embodiment shown in figure, the internal bounding surface 21, which bounds the aforesaid operating part 15, has a curved transverse profile. The edge zones 22A, 22B, in particular, protrude more than a central recessed zone 23 of the aforesaid bounding surface 21. In particular, the edge zones 22A, 22B.

The diameter D1 of the external cylindrical surface 13 of the tubular body 12 of the plug element 6 is less than the minimum internal diameter of the annular portion 17 of the valve body 2 in which the annular sealing element 9 is housed. In other words, the tubular body 12 is separated from the aforesaid annular portion 17 by a certain distance that enables the first flow F1 to advance in the slits 8.

Similarly, the diameter D1 of the external cylindrical surface 13 of the plug element 6 is less than an internal diameter of the internal end portion 16 of the second connection 4. The tubular body 12 is thus separated by a certain amount from the aforesaid annular portion 17 to enable the second flow F2 to advance in the slits 8. In particular, a cylindrical gap 41 for the passage of the second flow F2 is defined between the internal surface of the second connection 4 and the external cylindrical surface 13 of the plug element 6. Advantageously, an overall friction reduction is achieved owing to such a structural configuration, in particular owing to the gap 41 which implies no sliding-contact of the plug element 6 relative to the second connection 4. This configuration, which entails a coupling with clearance between the plug element 6 and the second connection 4, enables seizure phenomena to be effectively prevented that on the other hand occur in known valves because of small detritus, dirt contained in the plants and/or which are due to the corrosion of pipes, radiators or other components that leads to the formation and detachment of rust.

Furthermore, such a structural configuration, which entails a coupling with clearance, advantageously makes superfluous to resort, during manufacturing operations, to the excessive degrees of dimensional tolerance corresponding to costly and demanding high levels of machining precision which on the other hand are required in the known valves.

The diameter D1 of the external cylindrical surface 13 of the tubular body 12 is greater than a minimum internal diameter of the above-mentioned internal bounding surface 21. In particular, the diameter D1 of the external cylindrical surface 13 of the tubular body 12 is greater than a minimum internal diameter D2 of said edge zones 22A, 22B. In this manner, between the annular sealing element 9 and the plug element 6 a certain degree of mechanical interference MA is defined that enables effective control of fluid flows through the first passage port PI and the second passage port P2 to be obtained.

The passage ports P1 and P2 are defined by the reciprocal position of the bounding wall 29 of the plug element 6, in particular the portion comprising the slits 8, with respect to the operating part 15 of the closing sealing element 9. Owing to the specific configuration of the closing sealing element 9, in particular the operating part 15 that projects partially inside the slits 8, thus with a certain degree of mechanical interference with the bounding wall 29 of the plug element 6, it is possible to provide coupling with clearance between the plug element 6 and the region of the valve in the proximity of the annular portion 17 and internal end portion 16, without having to resort for the latter to degrees of dimensional tolerance corresponding to costly and demanding high levels of machining precision.

In other words, during manufacturing, the stiff parts of the valve 1, i.e. the annular portion 17, the internal end portion 16 and the plug element 6, can be worked with much smaller tolerances than devices of the prior art.

The possibility of providing a coupling with clearance between the plug element 6 and the region affected by the annular portion 17 and by the internal end portion 16 enables seizure phenomena to be effectively prevented that on the other hand occur in known valves because of detritus, dirt contained in the plants and/or which are due to the corrosion of pipes, radiators or other components that leads to the formation and detachment of rust.

Precise action of control of the passage and of shutting off of both the first flow F1 and the second flow F2 occurs in the same shared zone bounded by the slit 8 and the operating part 15. This means that, unlike the aforesaid known valves in which the cold water and the hot water penetrate the mixing chamber through two mutually distant passage-ports that thus require double high-precision machining, in the valve 1 according to the present invention, there is only one passage port, defined by the slit/s 8 and the operating part 15, on which, during manufacture, it is sufficient to perform machining with appropriate machining quality and precision - but not necessarily excessive machining as in the case of the known valves disclosed previously, for the reasons set out below.

The mechanical interference between the closing sealing element 9 and the bounding wall 29 compensates for possible greater clearance between the plug element 6 and the annular portion 17 and/or the internal end portion 16, ensuring correct operation of the valve. Naturally, the aforesaid interference is not an obstacle to the axial movement of the plug element 6 owing to the elastic deformability of the closing sealing element 9.

In other words, the partial protrusion of the operating part 15 into the slits 8, i.e. the certain degree of mechanical interference between the closing sealing element 9 and the plug element 6, ensures constantly correct geometry of the passage areas for the first flow F1 and second flow F2, and compensates possible dimensional deviations of the plug element 6, of the annular portion 17 and of the internal end portion 16. It is thus not necessary to meet excessively strict tolerances for the parts that have just been mentioned.

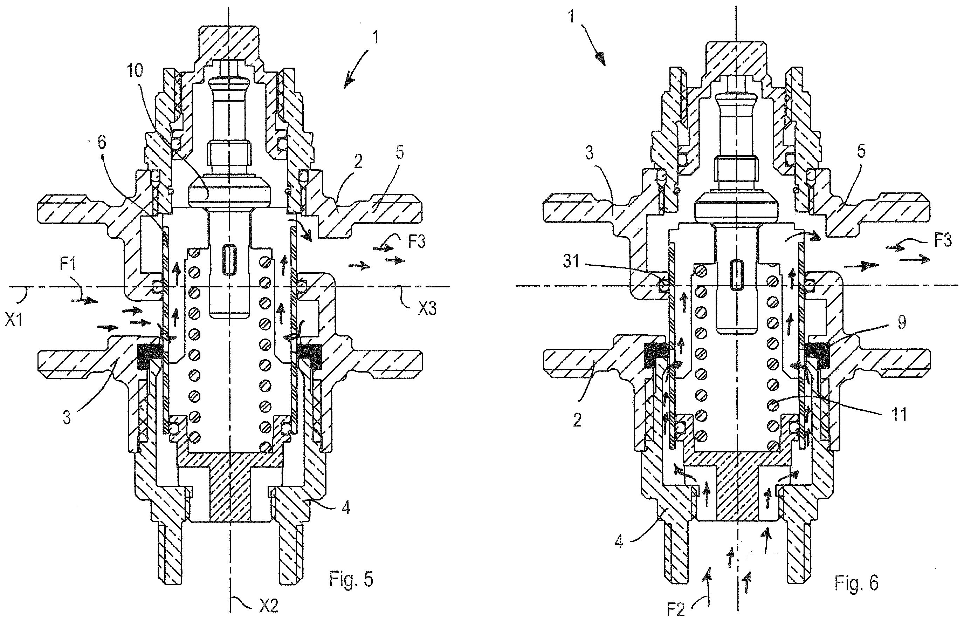

The configuration with mechanical interference disclosed above involves the following. In an operating condition in which only hot water is allowed to pass, i.e. the first flow F1, the plug element 6 can adopt a position in which the lower surface 39 of the slit 8 rests on the edge portion 22B, or a position as shown in Figure 5 in which this lower surface 39 is positioned even higher, i.e. in a more internal zone of the bounding surface 21, this being allowed owing to the elastic deformation of the edge portion 22B that is in this manner compressed against the external cylindrical surface 13 of the plug element 6, thus ensuring an excellent sealing and arresting action in relation to the second flow F2. The plug element 6 can abut on the clamping ring nut 38.

Similarly, mutatis mutandis, in another operating condition in which only cold water, i.e. the second flow F2, is allowed to pass, the plug element 6 can adopt a position in which the upper surface 40 of the slit 8 rests on the edge portion 22A, or a position as shown in Figure 6 in which this upper surface 40 is positioned lower, in a more internal zone of the bounding surface 21. This is made possible owing to the elastic deformation of the edge portion 22A which in this case is compressed against the external cylindrical surface 13 of the plug element 6, thus ensuring an optimum sealing and arresting action on the first flow F1.

The plug element 6 comprises abutting portions 24 shaped for supportingly receiving, on one side, the thermosensitive piston 10 and on the opposite side an end of the counteracting compression spring 11.

The abutting portions comprise one or more longitudinal rib elements 24 distributed angularly around the longitudinal axis of the plug element 6, and projecting radially from an internal surface of the tubular body 12 of the plug element 6. The rib elements 24 comprise radial ridges 30 that define, at one end of the plug element 6, a first resting zone 25 for a flange portion 43 of the thermosensitive piston 10, and more internally a second resting zone 26 for the counteracting compression spring 11.

The thermostatic mixing valve 1 comprises a stationary receiving and distributing element 28 for the second flow F2 that is coupled with the second connection 4. In particular, the stationary receiving and distributing element 28 is internally screwed on the second connection 4.

The receiving and distributing element 28 has the function of receiving and distributing radially the second flow F2 so as to direct the second flow F2 to the cylindrical gap 41 defined between the internal surface of the second connection 4 and the external cylindrical surface 13 of the plug element 6. The receiving and distributing element 28 comprises a connecting portion 44, screwable on the second connection 4, and shaped to act as a dividing element 44 for the second flow F2, and a cup portion 35 that defines a blind cavity facing the thermostatic actuating means 10.

The cup portion 35 is shaped for closing at one end the cavity of the plug element 6, thus preventing the passage of the fluid directly into the latter, and thus preventing pressure of the second flow F2 on an area that comprises the entire cross section of the plug element 6. A suitable seal ring 32 ensures a slidable seal coupling between the plug element 6 and the receiving and distributing element 28.

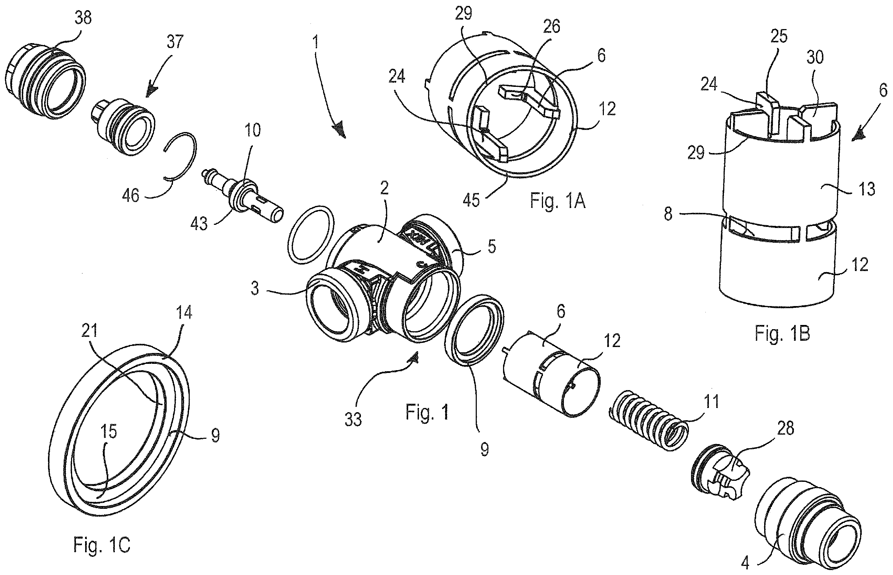

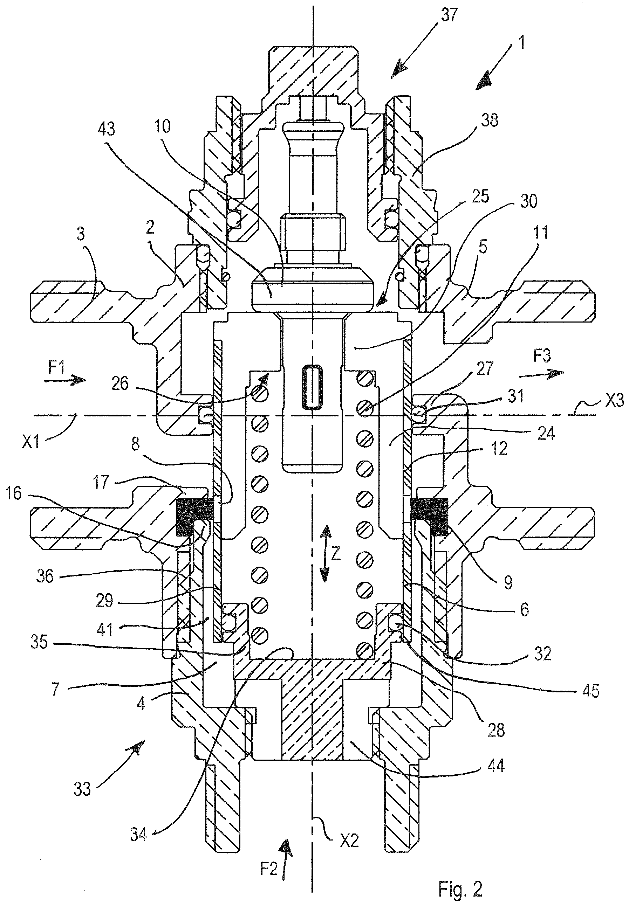

As already hinted at, the bounding wall 29 has a much reduced thickness Sp compared with the external diameter D1 of the plug element 6. This means that the plug element 6, in each end, but in particular at the end near the second connection 4 in which in certain conditions the pressure of the entering cold water can be significant, comprises a flat circular crown surface 45 (Figures 1A and 2) having a very restricted area. The pressure acting on the crown surface 45, that at least in part elides with further pressure acting on the opposite end of the plug element 6, thus gives rise to a small or negligible axial force that does not disturb the correct operation of the valve 1. The substantial axial force component generated by the pressure of the internal transverse area of the plug element 6 is on the other hand exerted on the receiving and distributing element 28 that is nevertheless stationary, thus not influencing axially the plug element 6.

In other words, the fluid exerts on the plug element 6 an action prevalently acting on the cylindrical surface 13, thus orthogonally to the movement direction Z, thus giving rise to radial force components that elide reciprocally.

The configuration of the valve 1, in particular owing to the particular configuration of the plug element 6 and of the receiving and distributing element 28 that avoid the problem of the significant pressure forces of the cold water that on the other hand returns to the previously disclosed known valves, entails, advantageously, the possibility of producing the valve 1 according to cuts or dimensions that can be freely chosen to meet specific needs.

An end of the compression spring 11 rests on a bottom transverse surface 34 of the cup portion 35. Owing to the fact that a part of the compression spring 11 is received in and enveloped by the cup portion 34, stable and precise positioning of the compression spring 11 is ensured, which is thus immune to possible misalignments.

During operation, a temperature increase entails a dilation of the thermostatic actuating means 10 that, by acting on the first resting zone 25 of the ridges 30, pushes the plug element 6 to the second connection 4, contrasting the opposite elastic force of the compression spring 11, which is thus compressed against the stationary cup portion 35. In this manner, the slit 8 is lowered so as to reduce progressively the first passage port PI and increase the second passage port P2, thus reducing the passage of hot water and increasing that of cold water, till to, if necessary, to a total arrest of the flow of hot water, in the event of an excessive temperature increase.

When a successive temperature drop occurs, the thermostatic actuating means 10 undergoes a thermal contraction that enables the plug element 6, pushed by the compression spring 11 in progressive release and expansion, to shift and move away from the second connection 4. As result, the slit 8 is lifted, thus again opening the first passage port PI and enabling hot water to enter the plug element 6 so as to restabilise the desired temperature of the third exiting flow F3.

The plug element 6, at one end, is guided slidably by a toroidal portion 27 of the valve body 2 that extends around the tubular body 12, and, at an opposite end, is slidably guided by the receiving and distributing element 28.

In particular, the bounding wall 29 of the plug element 6 is externally in contact, sealingly and in a slidable manner, with a first seal ring 31, of the O-ring type, housed in the toroidal portion 27, internally in contact, sealingly and in a slidable manner, with a second seal ring 32, of the O-ring type, housed in the receiving and distributing element 28. Undesired leaks of fluid are thus prevented.

The plug element 6 always rests on and is guided in two axially spaced apart regions and this avoids undesired tilts thereof and ensures constant and precise positioning and axial alignment of the plug element 6, with clear advantages from the point of view of precision and operating regularity of the valve 1.

The valve 1 so configured therefore ensures constant effective mixing of the domestic water, reducing the need for intervention by specialised operators, with consequent cost savings.

From what has been disclosed and shown in the attached drawings, it is thus clear that the invention relates to a thermostatic mixing valve that has improved operation, that has different improvements on the prior art and is suitable for achieving the previously mentioned objects and advantages.

Some parts of the thermostatic mixing valve 1, such as the valve body 2, the second connection 4, the clamping ring nut 38 and the calibrating member 37 are made of an antidezincifying brass that is highly resistant to corrosion from contact with water, the counteracting spring 11 is made of stainless steel and the plug element 6 is made of polymer that is resistant to high and low temperatures.

In practice, the materials, as far as they are compatible with the specific use and with the respective single components for which they are intended, can be appropriately chosen according to the available prior art provided that they are suitable for the specific use for which they are intended.

It is possible to configure and dimension the valve 1 and use materials in a desired manner according to the multiple applications to which the valve 1 can be intended and variations and/or additions to what has been disclosed and illustrated in the attached drawings are possible.

## Claims

1. Thermostatic mixing valve for a hydraulic circuit, comprising:
- a valve body (2) provided with a first connection (3) for the entry of a first flow (F1) of fluid in a first direction (X1);
- a second connection (4) connected to said valve body (2) for the entry of a second flow (F2) of fluid in a second direction (X2) arranged transversely to said first direction (X1);
- a third connection (5) for the exit of a third flow (F3), in particular of mixed fluid, in a third direction (X3) arranged transversely to said second direction (X2);
- a plug element (6) that is slidable inside a housing cavity (7) defined within said valve body (2) and said second connection (4), on said plug element (6) there being obtained passage opening means (8) for said first flow (F1) and for said second flow (F2);
- a closing portion (9) cooperating with said passage opening means (8) to define a first passage port (P1) for said first flow (F1) of fluid and a second passage port (P2) for said second flow (F2) of fluid
- thermostatic actuating means (10) and counteracting elastic means (11) arranged for driving said plug element (6) and varying in a controlled manner said first passage port (P1) and said second passage port (P2) so as to maintain constant, at a desired value, the temperature of said third flow (F3) of fluid,
said plug element (6) comprising a tubular body (12) bounded externally by a cylindrical surface (13) on which said passage opening means (8) for the fluid is circumferentially obtained,
said closing portion being defined by an annular closing-sealing-element (9) housed in a seat obtained in said valve body (2) and projecting radially so as to intercept said passage opening means (8) for the fluid, said closing-sealing-element (9) comprising an operating part (15) arranged in a cantilevered manner and having an internal bounding surface (21), which faces an internal zone of the plug element (6), and edge zones (22A, 22B) mutually spaced, wherein said internal bounding surface (21) and said edge zones (22A, 22B) are at least partially positioned inside said passage opening means (8),
**CHARACTERISED IN THAT** said plug element (6) is made of a single piece and said passage opening means (8) comprise one or more slits (8) obtained through the thickness of a bounding wall (29) of said plug-element (6),
AND **IN THAT** said annular closing-sealing element (9) is made of an elastically deformable material and the external cylindrical surface (13) of said plug-element (6) has an external diameter (D1) which is greater than a minimum internal diameter (D2) of said edge zones (22A, 22B), said operating-part (15) centripetally projecting towards said plug-element (6) and penetrating at least partially inside said one or more slits (8).

2. Thermostatic mixing valve according to claim 1, wherein said second connection (4) is removably connected to said valve body (2), and wherein said annular sealing element (9) comprises a connecting part (14) shaped for being clamped between said valve body (2) and said second connection (4) and housed in an annular seat (18) defined by an internal end portion (16) of said second connection (4) and by an annular portion (17) of said valve body (2), said operating part (15), protruding in a centripetal direction towards said plug element (6) and in a cantilevered manner by a certain amount beyond said internal end portion (16) and beyond said annular portion (17).

3. Thermostatic mixing valve according to claim 1 or 2, wherein said internal bounding surface (21), delimiting said operating part (15), has a curved transverse profile, and wherein said edge zones (22A, 22B) protrude more than a central recessed zone (23) of said bounding surface (21).

4. Thermostatic mixing valve according to any one of claims 1 to 3, wherein between said annular sealing element (9) and said plug element (6) a certain degree of mechanical interference (MA) is defined.

5. Thermostatic mixing valve according to any one of claims 1 to 4, wherein said operating part (15) comprises a pair of mutually parallel surfaces (50, 51), which are transversely arranged with respect to said internal bounding surface (21) and with respect to a movement direction (Z) and to a longitudinal axis of said plug element (6), said parallel surfaces (50, 51) extending in part inside said passage opening means (8) so as to face respective surfaces (40, 39) which delimit said passage opening means (8), wherein said parallel surfaces (50, 51) are shaped for restingly receiving said respective surfaces (40, 39) of said plug-element (6).

6. Thermostatic mixing valve according to claim 1, wherein said annular sealing element (9) is made of an elastically deformable material, has a rectangular section and is housed, without being clamped, in a seat defined in said valve body (2) or defined together by said valve body (2) and by said second connection (4).

7. Thermostatic mixing valve according to any preceding claim, wherein said bounding wall (29) has a cylindrical shape that bounds, in said plug element (6), a longitudinal through mixing cavity for said first flow (F1) and said second flow (F2).

8. Thermostatic mixing valve according to any preceding claim, wherein said annular closing-sealing-element (9) is housed in an annular seat (18) having an "L"-shaped cross section.

9. Thermostatic mixing valve according to any preceding claim, wherein said plug element (6) comprises abutting portions (24) shaped for supportingly receiving, on the one hand, said thermostatic actuating means (10) and, on the opposite side, said counteracting elastic means (11).

10. Thermostatic mixing valve according to claim 9, wherein said abutting portions comprise one or more longitudinal rib elements (24) distributed angularly around a longitudinal axis of said plug element (6), and projecting radially from an internal surface of said tubular body (12), said one or more rib elements (24) comprising radial ridges (30) that define, at one end of said plug element (6), a first resting zone (25) for a flange portion (26) of said thermostatic actuating means (10), and, more internally, a second resting zone (26) for said counteracting elastic means (11).

11. Thermostatic mixing valve according to any preceding claim, wherein said plug element (6), is at one end guided slidably by a toroidal portion (27) of said valve body (2) that extends around said tubular body (12), and, at an opposite end, is slidably guided by a receiving and distributing element (28) for said second flow (F2) of fluid coupled with said second connection (4).

12. Thermostatic mixing valve according to claim 11 as appended to claim 10, wherein said counteracting elastic means comprises a compression spring (11) arranged inside said plug element (6) to push said plug element (6) against said thermostatic actuating means (10), said compression spring (11) having a first end that is housed in a blind cup portion (35) of said receiving and distributing element (28), and rests on a bottom transverse surface (34) of said blind cup portion (35), said compression spring (11) having a second end that rests on said second resting zone (26) defined by said radial ridges (30).

13. Thermostatic mixing valve according to claim 12, wherein said tubular body (12) is in contact externally, in a sealed and slidable manner, with a first seal ring (31) housed in said toroidal portion (27), said tubular body (12) being in contact internally, sealingly and slidingly, with a second seal ring (32) housed in said receiving and distributing element (28).

14. Thermostatic mixing valve according to any preceding claim, wherein said second connection (4), of the ring nut type, is connected to a side of said valve body (2) by a threaded coupling (36), said second connection (4) and said valve body (2) being configured together to enable, during assembly, said thermostatic actuating means (10), said elastic means (11), said plug element (12) and said annular sealing element (9) to be inserted into said housing cavity (7) through said side (33).

15. Thermostatic mixing valve according to any preceding claim, wherein said first connection (3) and said third connection (5) are axially aligned, said second connection (4) is oriented orthogonally with respect to said first connection (3), and wherein said first connection (3) is arranged for receiving a first flow (F1) of hot water and said second connection (4) is arranged for receiving a second flow (F2) of cold water.

16. Thermostatic mixing valve according to any preceding claim and comprising a calibrating member (37) for positioning said thermostatic actuating means (10) according to a temperature value that it is desired to obtain for said third flow (F3) of fluid.

## Patentansprüche

1. Thermostatisches Mischventil für einen Hydraulikkreis, umfassend:
- einen Ventilkörper (2), der mit einem ersten Anschluss (3) für den Eintritt eines ersten Fluidstroms (F1) in einer ersten Richtung (X1) versehen ist;
- einen an den Ventilkörper (2) angeschlossenen zweiten Anschluss (4) für den Eintritt eines zweiten Fluidstroms (F2) in einer quer zur ersten Richtung (X1) angeordneten zweiten Richtung (X2);
- einen dritten Anschluss (5) für den Austritt eines dritten Stroms (F3), insbesondere von gemischtem Fluid, in einer quer zur zweiten Richtung (X2) angeordneten dritten Richtung (X3);
- ein Stopfenelement (6), das im Inneren eines innerhalb des Ventilkörpers (2) und des zweiten Anschlusses (4) definierten Gehäusehohlraums (7) verschiebbar ist, wobei an dem Stopfenelement (6) Durchgangsöffnungsmittel (8) für den ersten Strom (F1) und für den zweiten Strom (F2) erhalten sind;
- einen Verschlussabschnitt (9), der mit den Durchgangsöffnungsmitteln (8) zusammenwirkt, um einen ersten Durchgangskanal (P1) für den ersten Fluidstrom (F1) und einen zweiten Durchgangskanal (P2) für den zweiten Fluidstrom (F2) zu definieren,
- thermostatische Betätigungsmittel (10) und entgegenwirkende elastische Mittel (11), die dafür eingerichtet sind, das Stopfenelement (6) anzutreiben und den ersten Durchgangskanal (P1) und den zweiten Durchgangskanal (P2) in einer kontrollierten Weise zu verändern, sodass die Temperatur des dritten Fluidstroms (F3) konstant auf einem gewünschten Wert gehalten wird,
wobei das Stopfenelement (6) einen rohrförmigen Körper (12) umfasst, der außen von einer zylindrischen Fläche (13) begrenzt wird, an der das Durchgangsöffnungsmittel (8) für das Fluid umfangsmäßig erhalten ist,
wobei der Verschlussabschnitt von einem ringförmigen Verschluss-Dichtelement (9) definiert wird, das in einem im Ventilkörper (2) erhaltenen Sitz untergebracht ist und radial vorspringt, sodass es die Durchgangsöffnungsmittel (8) für das Fluid unterbricht, wobei das Verschluss-Dichtelement (9) ein Wirkteil (15) umfasst, das in einer auskragenden Weise angeordnet ist und eine innere Begrenzungsfläche (21), die einem inneren Bereich des Stopfenelements (6) zugewandt ist, und wechselseitig beabstandete Kantenbereiche (22A, 22B) aufweist, wobei die innere Begrenzungsfläche (21) und die Kantenbereiche (22A, 22B) mindestens teilweise im Inneren der Durchgangsöffnungsmittel (8) positioniert sind,
**DADURCH GEKENNZEICHNET, DASS** das Stopfenelement (6) aus einem einzigen Stück gefertigt ist und die Durchgangsöffnungsmittel (8) einen oder mehrere Schlitze (8) umfassen, die durch die Dicke einer Begrenzungswand (29) des Stopfenelements (6) hindurch erhalten sind,
UND DADURCH, DASS das ringförmige Verschluss-Dichtelement (9) aus einem elastisch verformbaren Material gefertigt ist und die zylindrische Außenfläche (13) des Stopfenelements (6) einen Außendurchmesser (D1) aufweist, der größer ist als ein minimaler Innendurchmesser (D2) der Kantenbereiche (22A, 22B), wobei das Wirkteil (15) zentripetal zum Stopfenelement (6) hin vorspringt und mindestens teilweise in das Innere des einen oder mehrerer Schlitze (8) eindringt.

2. Thermostatisches Mischventil nach Anspruch 1, wobei der zweite Anschluss (4) abnehmbar an den Ventilkörper (2) angeschlossen ist, und wobei das ringförmige Dichtelement (9) einen Anschlussteil (14) umfasst, der dafür ausgeformt ist, zwischen dem Ventilkörper (2) und dem zweiten Anschluss (4) eingeklemmt und in einem ringförmigen Sitz (18) untergebracht zu werden, der von einem inneren Endabschnitt (16) des zweiten Anschlusses (4) und von einem ringförmigen Abschnitt (17) des Ventilkörpers (2) definiert wird, wobei das Wirkteil (15) in einer zentripetalen Richtung zum Stopfenelement (6) hin, und in einer auskragenden Weise um einen gewissen Betrag über den inneren Endabschnitt (16) hinaus und über den ringförmigen Abschnitt (17) hinaus vorspringt.

3. Thermostatisches Mischventil nach Anspruch 1 oder 2, wobei die innere Begrenzungsfläche (21), welche das Wirkteil (15) abgrenzt, ein gekrümmtes Querprofil aufweist, und wobei die Kantenbereiche (22A, 22B) stärker vorspringen als ein zentraler vertiefter Bereich (23) der Begrenzungsfläche (21).

4. Thermostatisches Mischventil nach einem der Ansprüche 1 bis 3, wobei zwischen dem ringförmigen Dichtelement (9) und dem Stopfenelement (6) ein gewisser Grad an mechanischer Beeinträchtigung (MA) definiert ist.

5. Thermostatisches Mischventil nach einem der Ansprüche 1 bis 4, wobei das Wirkteil (15) ein Paar wechselseitig paralleler Flächen (50, 51) umfasst, die in Bezug auf die innere Begrenzungsfläche (21) und in Bezug auf eine Bewegungsrichtung (Z) und auf eine Längsachse des Stopfenelements (6) quer angeordnet sind, wobei sich die parallelen Flächen (50, 51) zum Teil im Inneren der Durchgangsöffnungsmittel (8) erstrecken, sodass sie jeweiligen Flächen (40, 39), welche die Durchgangsöffnungsmittel (8) abgrenzen, zugewandt sind, wobei die parallelen Flächen (50, 51) dafür ausgeformt sind, die jeweiligen Flächen (40, 39) des Stopfenelements (6) ruhend aufzunehmen.

6. Thermostatisches Mischventil nach Anspruch 1, wobei das ringförmige Dichtelement (9) aus einem elastisch verformbaren Material gefertigt ist, einen rechtwinkligen Querschnitt aufweist und, ohne eingeklemmt zu sein, in einem Sitz untergebracht ist, der im Ventilkörper (2) definiert ist oder vom Ventilkörper (2) und vom zweiten Anschluss (4) zusammen definiert wird.

7. Thermostatisches Mischventil nach einem vorstehenden Anspruch, wobei die Begrenzungswand (29) eine zylindrische Form aufweist, die in dem Stopfenelement (6) einen Längsdurchmischungshohlraum für den ersten Strom (F1) und den zweiten Strom (F2) begrenzt.

8. Thermostatisches Mischventil nach einem vorstehenden Anspruch, wobei das ringförmige Verschluss-Dichtelement (9) in einem ringförmigen Sitz (18) untergebracht ist, der einen "L"-förmigen Querschnitt aufweist.

9. Thermostatisches Mischventil nach einem vorstehenden Anspruch, wobei das Stopfenelement (6) Anschlagabschnitte (24) umfasst, die dafür ausgeformt sind, einerseits das thermostatische Betätigungsmittel (10), und auf der gegenüberliegenden Seite das entgegenwirkende elastische Mittel (11) tragend aufzunehmen.

10. Thermostatisches Mischventil nach Anspruch 9, wobei die Anschlagabschnitte ein oder mehrere Längsrippenelemente (24) umfassen, die winkelmäßig um eine Längsachse des Stopfenelements (6) herum verteilt sind und radial von einer inneren Fläche des rohrförmigen Körpers (12) vorspringen, wobei das eine oder mehrere Rippenelemente (24) radiale Stege (30) umfassen, die an einem Ende des Stopfenelements (6) eine erste Ruhezone (25) für einen Flanschabschnitt (26) des thermostatischen Betätigungsmittels (10), und weiter innen eine zweite Ruhezone (26) für das entgegenwirkende elastische Mittel (11) definieren.

11. Thermostatisches Mischventil nach einem vorstehenden Anspruch, wobei das Stopfenelement (6) an einem Ende von einem toroiden Abschnitt (27) des Ventilkörpers (2), der sich um den rohrförmigen Körper (12) herum erstreckt, verschiebbar geführt wird, und an einem gegenüberliegenden Ende von einem Aufnahme- und Verteilelement (28) für den zweiten Fluidstrom (F2), das mit dem zweiten Anschluss (4) gekoppelt ist, verschiebbar geführt wird.

12. Thermostatisches Mischventil nach Anspruch 11 in Abhängigkeit von Anspruch 10, wobei das entgegenwirkende elastische Mittel eine Druckfeder (11) umfasst, die im Inneren des Stopfenelements (6) angeordnet ist, um das Stopfenelement (6) gegen das thermostatische Betätigungsmittel (10) zu drücken, wobei die Druckfeder (11) ein erstes Ende aufweist, das in einem blinden Becherabschnitt (35) des Aufnahme- und Verteilelements (28) untergebracht ist und auf einer unteren Querfläche (34) des blinden Becherabschnitts (35) ruht, wobei die Druckfeder (11) ein zweites Ende aufweist, das auf der von den radialen Stegen (30) definierten zweiten Ruhezone (26) ruht.

13. Thermostatisches Mischventil nach Anspruch 12, wobei der rohrförmige Körper (12) außen in einer dichten und verschiebbaren Weise mit einem ersten Dichtungsring (31) in Kontakt steht, der in dem toroiden Abschnitt (27) untergebracht ist, wobei der rohrförmige Körper (12) innen dicht und verschiebbar mit einem zweiten Dichtungsring (32) in Kontakt steht, der in dem Aufnahme- und Verteilelement (28) untergebracht ist.

14. Thermostatisches Mischventil nach einem vorstehenden Anspruch, wobei der zweite Anschluss (4) vom Ringmuttern-Typ über eine Gewindekupplung (36) an eine Seite des Ventilkörpers (2) angeschlossen ist, wobei der zweite Anschluss (4) und der Ventilkörper (2) zusammen so konfiguriert sind, dass sie während des Zusammenbaus ermöglichen, dass das thermostatische Betätigungsmittel (10), das elastische Mittel (11), das Stopfenelement (12) und das ringförmige Dichtelement (9) über die Seite (33) in den Gehäusehohlraum (7) eingebracht werden.

15. Thermostatisches Mischventil nach einem vorstehenden Anspruch, wobei der erste Anschluss (3) und der dritte Anschluss (5) axial fluchten, der zweite Anschluss (4) in Bezug auf den ersten Anschluss (3) orthogonal ausgerichtet ist, und wobei der erste Anschluss (3) dafür eingerichtet ist, einen ersten Strom (F1) von heißem Wasser aufzunehmen, und der zweite Anschluss (4) dafür eingerichtet ist, einen zweiten Strom (F2) von kaltem Wasser aufzunehmen.

16. Thermostatisches Mischventil nach einem vorstehenden Anspruch und ein Justierglied (37) umfassend zum Positionieren des thermostatischen Betätigungsmittels (10) gemäß einem Temperaturwert, der für den dritten Fluidstrom (F3) zu erhalten gewünscht wird.

## Revendications

1. Soupape de mélange thermostatique pour un circuit hydraulique, comprenant :
- un corps de soupape (2) pourvu d'un premier raccord (3) pour l'entrée d'un premier écoulement (F1) de fluide dans une première direction (X1) ;
- un deuxième raccord (4) raccordé audit corps de soupape (2) pour l'entrée d'un deuxième écoulement (F2) de fluide dans une deuxième direction (X2) agencée transversalement à ladite première direction (X1) ;
- un troisième raccord (5) pour la sortie d'un troisième écoulement (F3), en particulier de fluide mixte, dans une troisième direction (X3) agencée transversalement à ladite deuxième direction (X2) ;
- un élément obturateur (6) qui peut coulisser dans une cavité de logement (7) définie dans ledit corps de soupape (2) et ledit second raccord (4), en obtenant sur ledit élément obturateur (6) des moyens d'ouverture de passage (8) pour ledit premier écoulement (F1) et pour ledit deuxième écoulement (F2) ;
- une partie de fermeture (9) coopérant avec ledit moyen d'ouverture de passage (8) pour définir un premier orifice de passage (P1) pour ledit premier écoulement (F1) de fluide et un deuxième orifice de passage (P2) pour ledit deuxième écoulement (F2) de fluide,
- des moyens d'actionnement thermostatiques (10) et des moyens élastiques de contrebalancement (11) agencés pour entraîner ledit élément obturateur (6) et faire varier de manière contrôlée ledit premier orifice de passage (P1) et ledit deuxième orifice de passage (P2) de manière à maintenir constante, à une valeur souhaitée, la température dudit troisième écoulement (F3) de fluide,
ledit élément obturateur (6) comprenant un corps tubulaire (12) délimité extérieurement par une surface cylindrique (13) sur laquelle ledit moyen d'ouverture de passage (8) pour le fluide est obtenu au plan circonférentiel,
ladite partie de fermeture étant définie par un élément d'étanchéité de fermeture annulaire (9) logé dans un siège ménagé dans ledit corps de soupape (2) et faisant saillie radialement de manière à intercepter ledit moyen d'ouverture de passage (8) pour le fluide, ledit élément d'étanchéité de fermeture (9) comprenant une partie opératoire (15) agencée en porte-à-faux et ayant une surface de délimitation interne (21) qui est en regard d'une zone interne de l'élément obturateur (6), et des zones de bord (22A, 22B) mutuellement espacées, dans lequel ladite surface de délimitation interne (21) et lesdites zones de bord (22A, 22B) sont au moins en partie positionnées à l'intérieur dudit moyen d'ouverture de passage (8),
**CARACTÉRISÉ EN CE QUE** ledit élément obturateur (6) est constitué d'une seule pièce et ledit moyen d'ouverture de passage (8) comprend une ou plusieurs fentes (8) obtenues à travers l'épaisseur d'une paroi de délimitation (29) dudit élément obturateur (6),
ET **EN CE QUE** ledit élément d'étanchéité de fermeture annulaire (9) est constitué d'un matériau à déformation élastique et la surface cylindrique externe (13) dudit élément obturateur (6) a un diamètre externe (D1) qui est supérieur à un diamètre interne minimal (D2) desdites zones de bord (22A, 22B), ladite partie opératoire (15) faisant saillie en mode centripète vers ledit élément obturateur (6) et pénétrant au moins en partie dans lesdites une ou plusieurs fentes (8).

2. Soupape de mélange thermostatique selon la revendication 1, dans laquelle ledit second raccord (4) est raccordé de manière amovible audit corps de soupape (2) et dans laquelle ledit élément d'étanchéité annulaire (9) comprend une partie de raccordement (14) conformée pour être serrée entre ledit corps de soupape (2) et ledit second raccord (4) et logée dans le siège annulaire (18) défini par une partie d'extrémité interne (16) dudit second raccord (4) et par une partie annulaire (17) dudit corps de soupape (2), ladite partie opératoire (15) faisant saillie dans une direction centripète vers ledit élément obturateur (6) et en porte-à-faux d'une certaine quantité au-delà de ladite partie d'extrémité interne (16) et au-delà de ladite partie annulaire (17).

3. Soupape de mélange thermostatique selon la revendication 1 ou 2, dans laquelle ladite surface de délimitation interne (21) délimitant ladite partie opératoire (15) a un profil transversal incurvé et dans laquelle lesdites zones de bord (22A, 22B) font saillie plus qu'une zone évidée centrale (23) de ladite surface de délimitation (21).

4. Soupape de mélange thermostatique selon l'une quelconque des revendications 1 à 3, dans laquelle un certain degré d'interférence mécanique (MA) est défini entre ledit élément d'étanchéité annulaire (9) et ledit élément obturateur (6).

5. Soupape de mélange thermostatique selon l'une quelconque des revendications 1 à 4, dans laquelle ladite partie opératoire (15) comprend une paire de surfaces mutuellement parallèles (50, 51) qui sont agencées transversalement par rapport à ladite surface de délimitation interne (21) et par rapport à une direction de mouvement (Z) et à un axe longitudinal dudit élément obturateur (6), lesdites surfaces parallèles (50, 51) s'étendant en partie à l'intérieur dudit moyen d'ouverture de passage (8) de manière à être tournées vers des surfaces respectives (40, 39) qui délimitent ledit moyen d'ouverture de passage (8), dans laquelle lesdites surfaces parallèles (50, 51) sont conformées pour recevoir en position de repos lesdites surfaces respectives (40, 39) dudit élément obturateur (6).

6. Soupape de mélange thermostatique selon la revendication 1, dans laquelle ledit élément d'étanchéité annulaire (9) est constitué d'un matériau à déformation élastique, présente une section rectangulaire et est logé, sans être serré, dans un siège défini dans ledit corps de soupape (2) ou défini conjointement avec ledit corps de soupape (2) et avec ledit second raccord (4).

7. Soupape de mélange thermostatique selon l'une quelconque des revendications précédentes, dans laquelle ladite paroi de délimitation (29) a une forme cylindrique qui délimite, dans ledit élément obturateur (6), une cavité de mélange traversante longitudinale pour ledit premier écoulement (F1) et ledit deuxième écoulement (F2).

8. Soupape de mélange thermostatique selon l'une quelconque des revendications précédentes, dans laquelle ledit élément d'étanchéité de fermeture annulaire (9) est logé dans un siège annulaire (18) ayant une section transversale en forme de « L ».

9. Soupape de mélange thermostatique selon l'une quelconque des revendications précédentes, dans laquelle ledit élément obturateur (6) comprend des parties d'aboutement (24) conformées pour recevoir en support d'un côté ledit moyen d'actionnement thermostatique (10) et du côté opposé ledit moyen élastique de contrebalancement (11).

10. Soupape de mélange thermostatique selon la revendication 9, dans laquelle lesdites parties d'aboutement comprennent un ou plusieurs éléments nervurés longitudinaux (24) distribués selon un certain angle autour d'un axe longitudinal dudit élément obturateur (6) et faisant saillie radialement d'une surface interne dudit corps tubulaire (12), lesdits un ou plusieurs éléments nervurés (24) comprenant des nervures radiales (30) qui définissent, sur une extrémité dudit élément obturateur (6), une première zone de repos (25) pour une partie bridée (26) dudit moyen d'actionnement thermostatique (10) et, plus à l'intérieur, une seconde zone de réseau (26) pour ledit élément élastique de contrebalancement (11).

11. Soupape de mélange thermostatique selon l'une quelconque des revendications précédentes, dans laquelle ledit élément obturateur (6) est à une extrémité guidée à coulissement par une partie toroïdale (27) dudit corps de soupape (2) qui s'étend autour dudit corps tubulaire (12) et, à une extrémité opposée, est guidé par coulissement par un élément de réception et de distribution (28) pour ledit deuxième écoulement (F2) de fluide couplé audit deuxième raccord (4).

12. Soupape de mélange thermostatique selon la revendication 11 dans la mesure où elle dépend de la revendication 10, dans laquelle ledit moyen élastique de contrebalancement comprend un ressort de compression (11) agencé à l'intérieur dudit élément obturateur (6) pour pousser ledit élément obturateur (6) contre ledit moyen d'actionnement thermostatique (10), ledit ressort de compression (11) ayant une première extrémité qui est logée dans une partie d'oeillère (35) dudit élément de réception et de distribution (28) et repose sur une surface transversale inférieure (34) de ladite partie d'oeillère (35), ledit ressort de compression (11) ayant une seconde extrémité qui repose sur ladite seconde zone de repos (26) définie par lesdites nervures radiales (30).

13. Soupape de mélange thermostatique selon la revendication 12, dans laquelle ledit corps tubulaire (12) est en contact extérieurement, de manière scellée et coulissante, avec une première bague d'étanchéité (31) logée dans ladite partie toroïdale (27), ledit corps tubulaire (12) étant en contact intérieurement, de manière scellée et coulissante, avec une seconde bague d'étanchéité (32) logée dans ledit élément de réception et de distribution (28).

14. Soupape de mélange thermostatique selon l'une quelconque des revendications précédentes, dans laquelle ledit second raccord (4) du type à écrou annulaire est raccordé à un côté dudit corps de soupape (2) par un couplage fileté (36), ledit second raccord (4) et ledit corps de soupape (2) étant configurés pour permettre conjointement, au cours de l'assemblage, audit moyen d'actionnement thermostatique (10), audit moyen élastique (11), audit élément obturateur (12) et audit élément d'étanchéité annulaire (9) d'être insérés dans ladite cavité de logement (7) à travers ledit côté (33).

15. Soupape de mélange thermostatique selon l'une quelconque des revendications précédentes, dans laquelle ledit premier raccord (3) et ledit troisième raccord (5) sont alignés axialement, ledit deuxième raccord (4) est orienté orthogonalement par rapport audit premier raccord (3) et dans laquelle ledit premier raccord (3) est agencé pour recevoir un premier écoulement (F1) d'eau chaude et le deuxième raccord (4) est agencé pour recevoir un second écoulement (F2) d'eau froide.

16. Soupape de mélange thermostatique selon l'une quelconque des revendications précédentes et comprenant un élément de calibrage (37) pour positionner ledit moyen d'actionnement thermostatique (10) selon une valeur de température que l'on souhaite obtenir pour ledit troisième écoulement (F3) de fluide.
